# EUROPEAN PATENT APPLICATION

(11) **EP 4 641 691 A1**
(43) Date of publication of application: **29.10.2025**
(21) Application number: 25171808.6
(22) Date of filing: 22.04.2025
(51) Int. Cl.: H01M 4/58, H01M 4/1397, C01B 25/45, G01N 21/65, H01M 4/62, H01M 10/0525

(54) **POSITIVE ELECTRODE ACTIVE MATERIAL FOR RECHARGEABLE LITHIUM BATTERY, AND METHOD OF MANUFACTURING THE SAME**

(30) Priority: 22.04.2024 KR 20240053600
(71) Applicant: SAMSUNG SDI CO., LTD., Yongin-si, Gyeonggi-do 17084 (KR)
(72) Inventor: CHOI, Aram, 17084 Yongin-si (KR); LEE, Soonrewl, 17084 Yongin-si (KR); KIM, Young-Ki, 17084 Yongin-si (KR); KIM, Sangmi, 17084 Yongin-si (KR); DOO, Sungwook, 17084 Yongin-si (KR); KANG, Gwiwoon, 17084 Yongin-si (KR)
(74) Representative: Marks & Clerk LLP

(57) **Abstract**

Positive electrode active materials, their manufacturing methods, and rechargeable lithium batteries are provided. A positive electrode active material comprises a first particle that includes a compound represented by Chemical Formula 1 and has a first average particle diameter. A ratio (I_{D}/I_{G}) of intensity (I_{D}) of D peak at a wave number of about 1340±10cm⁻¹ in the Raman spectrum obtained from Raman spectroscopy to intensity (I_{G}) of G peak at a wave number of about 1590±10cm⁻¹ in the Raman spectrum obtained from Raman spectroscopy is in a range of about 0.5 to about 1.5.

## Description

### BACKGROUND

### 1. Field

According to one or more embodiments, the present disclosure relates to a positive electrode active material for a rechargeable lithium battery, a method of manufacturing the positive electrode active material, and a rechargeable lithium battery including the positive electrode active material. For example, one or more embodiments relate to a positive electrode active material including an olivine-based lithium compound, a method of manufacturing the positive electrode active material, and a rechargeable lithium battery including the positive electrode active material.

### 2. Background

Recently, the rapid spread and popularization of battery-powered and/or battery-using electronic devices, such as mobile phones, laptop computers, and/or the like, and/or electric vehicles, have driven a rapidly increasing demand for rechargeable batteries equipped or provided with relatively high energy density and high capacity. Therefore, intensive research has been conducted to improve performance of rechargeable lithium batteries, e.g., as a driving power source for hybrid and/or electric vehicles, and/or as a power storage power source, e.g., for resident power storage (e.g., a power wall).

A rechargeable lithium battery includes a positive electrode, a negative electrode, and an electrolyte, wherein the positive and negative electrodes each include an active material configured for intercalation and deintercalation of lithium ions. The batteries generate electrical energy caused by oxidation and reduction (i.e., redox) reactions that occur when the lithium ions are intercalated and deintercalated during the charging and discharge process.

### SUMMARY

One or more aspects are directed toward a positive electrode active material having high conductivity and excellent or suitable electrochemical properties.

One or more aspects are directed toward a rechargeable lithium battery having high conductivity and excellent or suitable electrochemical properties.

Additional aspects will be set forth in part in the description which follows and, in part, will be apparent from the description, or may be learned by practice of the presented embodiments of the disclosure.

According to one or more embodiments, a positive electrode active material includes a first particle that includes a compound expressed (e.g., represented) by Chemical Formula 1 and has a first average particle diameter.

The first particle is configured such that a ratio (I_{D}/I_{G}) of an intensity (I_{D}) of a D band peak to an intensity (I_{G}) of a G band peak is in a range of about 0.5 to about 1.5. The D band peak and the G band peak are present at wave numbers of about 1340 ± 10 inverse centimeter (cm⁻¹) and about 1590 ± 10 cm⁻¹, respectively, in a Raman spectrum obtained from Raman spectroscopy.

**Chemical Formula 1** Liₐ₁Feₓ₁B1_{y1}PO₄

In Chemical Formula 1, 0.8≤a1≤1.2, 0.950≤x1≤0.999, 0≤y1≤0.05, and B1 is at least one element selected from among Ti, Al, Mg, Zr, V, Zn, Nb, K, Y, B, and Cu.

According to one or more embodiments, a method of manufacturing a positive electrode active material includes: forming a mixture by mixing an iron phosphate precursor, a lithium source, and a carbon source; drying the mixture; and preparing a first particle by performing a calcination to a dried mixture.

The first particle includes a compound expressed (e.g., represented) by Chemical Formula 1.

The first particle is configured such that a ratio (I_{D}/I_{G}) of an intensity (I_{D}) of a D band peak to an intensity (I_{G}) of a G band peak is in a range of about 0.5 to about 1.5. The D band peak and the G band peak are present at wave numbers of about 1340 ± 10 cm⁻¹ and about 1590 ± 10 cm⁻¹, respectively, in a Raman spectrum obtained from Raman spectroscopy.

**Chemical Formula 1** Liₐ₁Feₓ₁B1_{y1}PO₄

In Chemical Formula 1, 0.8≤a1≤1.2, 0.950≤x1≤0.999, 0≤y1≤0.05, and B1 is at least one element selected from among Ti, Al, Mg, Zr, V, Zn, Nb, K, Y, B, and Cu.

According to one or more embodiments of disclosure, a rechargeable lithium battery includes the positive electrode active material.

At least some of the above and other features of the invention are set out in the claims.

### BRIEF DESCRIPTION OF THE DRAWINGS

The accompanying drawings are included to provide a further understanding of the present disclosure and are incorporated in and constitute a part of this specification. The drawings illustrate embodiments of the present disclosure and, together with the description, serve to explain principles of the present disclosure. In the drawings:
FIG. 1 illustrates a simplified conceptual diagram showing a rechargeable lithium battery according to one or more embodiments of the present disclosure.
FIGS. 2-5 illustrate simplified diagrams each showing a rechargeable lithium battery according to one or more embodiments, FIG. 2 showing a cylindrical battery, FIG. 3 showing a prismatic battery, and FIGS. 4 and 5 showing pouch-type (kind) batteries.
FIGS. 6 and 7 illustrate enlarged views showing a positive electrode active material layer of a rechargeable lithium battery according to one or more embodiments of the present disclosure.
FIG. 8 illustrates a flow chart showing a method of manufacturing a positive electrode active material according to one or more embodiments of the present disclosure.
FIGS. 9A and 9B illustrate SEM images showing a positive electrode active material according to one or more embodiments of the present disclosure.
FIGS. 10A-10C illustrate TEM images showing a positive electrode active material according to one or more embodiments and comparative examples of the present disclosure.
FIG. 11 illustrates a graph showing a measured result of Raman spectroscopic analysis on a positive electrode active material according to one or more embodiments of the present disclosure.

### DETAILED DESCRIPTION

Hereinafter, embodiments of the present disclosure will be described clearly and in more detail to such an extent that those skilled in the art easily implement the present disclosure. In order to sufficiently understand the configuration and effect of the present disclosure, one or more embodiments of the present disclosure will be described with reference to the accompanying drawings. It should be noted, however, that the present disclosure is not limited to the following example embodiments, and may be implemented in one or more suitable forms. Rather, the example embodiments are provided only to disclose the present disclosure and let those skilled in the art fully know the scope of the present disclosure.

In this description, it will be understood that, if (e.g., when) an element or component is referred to as being on another element, the element or component may be directly on the other element, or intervening elements may be present between therebetween. In contrast, if (e.g., when) an element is referred to as being "directly on" another element, there are no intervening elements present. In the drawings, thicknesses of some components are exaggerated for effectively explaining the technical contents. Like reference numerals refer to like elements throughout, and duplicative descriptions thereof may not be provided the specification.

Unless otherwise specially noted in this description, the expression of singular form (e.g., "a," "an," and/or "the") may include the expression of plural form, including "at least one," unless the context clearly dictates otherwise. In some embodiments, unless otherwise specially noted, the phrase "A or B" may indicate "A but not B", "B but not A", and "A and B". The terms "comprises," "includes," "comprising," "including," "comprise," "include," "having," "has," and/or "have," as used in this description, are intended to designate the presence of an embodied aspect, number, step (e.g., act or task), element, and/or a (e.g., any suitable) combination thereof, and do not preclude or exclude the presence or addition of one or more other features, numbers, steps (e.g., acts or tasks), elements, components, and/or a (e.g., any suitable) combination thereof.

As used herein, the term "combination thereof" may refer to a mixture, a stack, a composite, a copolymer, an alloy, a blend, or a reaction product.

In one or more embodiments, the term "layer" herein includes not only a shape formed on the whole surface if (e.g., when) viewed from a plan view, but also a shape formed on a partial surface.

It will be understood that, although the terms "first," "second," "third," and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer, or section. Thus, a first element, component, region, layer, or section described herein may be termed a second element, component, region, layer or section without departing from the teachings set forth herein.

As utilized herein, the term "and/or" includes any, and all, combinations of one or more of the associated listed items. Expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if (e.g., when) the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing particular embodiments only, and is not intended to limit the present disclosure. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments are described herein with reference to cross-sectional views, which are schematic views of embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

In this context, "consisting essentially of" indicates that any additional components will not materially affect the chemical, physical, optical or electrical properties of the semiconductor film.

Further, in this specification, the phrase "on a plane," or "plan view," indicates viewing a target portion from the top, and the phrase "on a cross-section" indicates viewing a cross-section formed by vertically cutting a target portion from the side.

The term "particle diameter", "particle size", and/or the like as utilized herein refers to an average diameter of particles if (e.g., when) the particles are spherical, and refers to an average major axis length of particles if (e.g., when) the particles are non-spherical. For example, a particle diameter may be an average particle diameter. In some embodiments, a particle diameter indicates an average particle diameter (D₅₀) where a cumulative volume is about 50 volume% in a particle size distribution. The average particle diameter (D₅₀) may be measured by a method widely suitable (known) to those skilled in the art, for example, by a particle size analyzer, a transmission electron microscope (TEM) image, or a scanning electron microscope (SEM) image. In one or more embodiments, a dynamic light-scattering measurement device is used to perform a data analysis, the number of particles is counted for each particle size range, and then from this, an average particle diameter (D₅₀) value may be obtained through a calculation. Alternatively, a laser scattering method may be utilized to measure the average particle diameter (D₅₀). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter (D₅₀) is calculated in the 50% standard of particle diameter distribution in the measurement device.

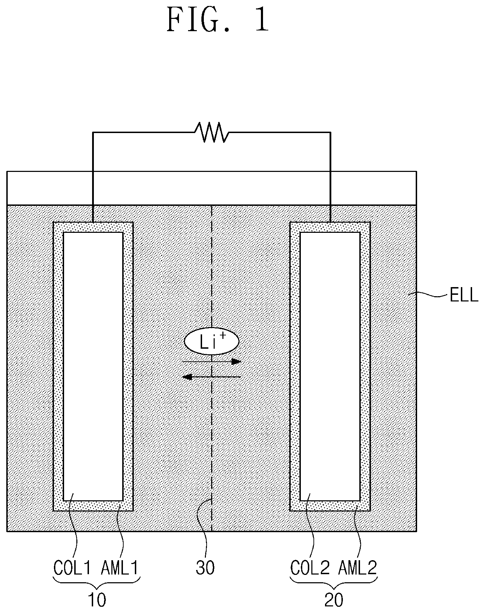

FIG. 1 illustrates a simplified conceptual diagram showing a rechargeable lithium battery according to one or more embodiments of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced and/or apart (e.g., spaced apart or separated) from each other across the separator 30. The separator 30 may be arranged between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be a medium by which lithium ions are transferred between the positive electrode 10 and the negative electrode 20. In the electrolyte ELL, the lithium ions may move through the separator 30 toward one of the positive electrode 10 and the negative electrode 20.

### Positive Electrode 10

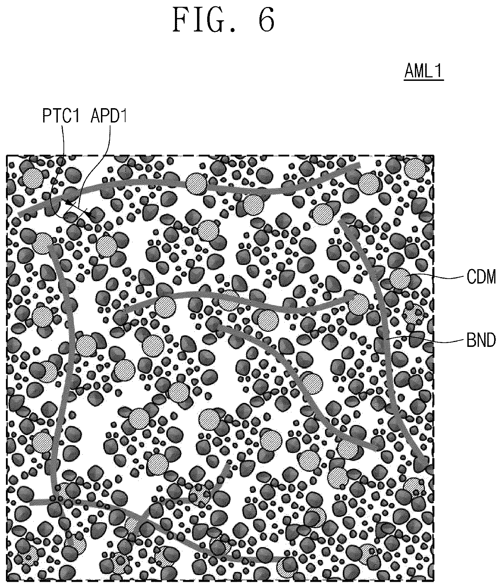

The positive electrode 10 for a rechargeable lithium battery may include a current collector COL1 and a positive electrode active material layer AML1 formed on the current collector COL1. The positive electrode active material layer AML1 may include a positive electrode active material and further include a binder and/or a conductive material. With reference to FIG. 6, the following will describe in more detail the positive electrode active material layer AML1 according to one or more embodiments of the present disclosure. Aluminium (Al) may be used as the current collector COL1, but the present disclosure is not limited thereto.

### Negative Electrode 20

The negative electrode 20 for a rechargeable lithium battery may include a current collector COL2 and a negative electrode active material layer AML2 positioned on the current collector COL2. The negative electrode active material layer AML2 may include a negative electrode active material and may further include a binder and/or a conductive material.

For example, the negative electrode active material layer AML2 may include a negative electrode active material of about 90 wt% to about 99 wt%, a binder of about 0.5 wt% to about 5 wt%, and a conductive material of about 0 wt% to about 5 wt%, based on a total weight (100 wt%) of the negative electrode active material layer AML2.

The binder may serve to improve attachment of negative electrode active material particles to each other and also to improve attachment of the negative electrode active material to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, and/or a (e.g., any suitable) combination thereof.

The aqueous binder may include styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, and/or a (e.g., any suitable) combination thereof.

If (e.g., when) an aqueous binder is used as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include Na, K, or Li.

The dry binder may include a fibrillizable polymer material, for example, polytetrafluoroethylene, polyvinylidene fluoride, polyvinylidene fluoride-hexafluoropropylene copolymer, polyethylene oxide, and/or a (e.g., any suitable) combination thereof.

The conductive material may be used to provide an electrode with conductivity, and any suitable conductive material without causing chemical change of a battery may be used as the conductive material to constitute the battery. For example, the conductive material may include a carbon-based material such as natural graphite, artificial graphite, carbon black, acetylene black, Ketjen black, carbon fiber, carbon nano-fiber, and carbon nano-tube; a metal powder or metal fiber including one or more of copper, nickel, aluminium, and silver; a conductive polymer such as a polyphenylene derivative; and/or a (e.g., any suitable) mixture thereof.

The current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

### Negative Electrode Active Material

The negative electrode active material in the negative electrode active material layer AML2 may include a material that can reversibly intercalate and deintercalate lithium ions, a lithium metal, a lithium metal alloy, a material that can dope and/or de-dope lithium, and/or a transition metal oxide.

The material that can reversibly intercalate and deintercalate lithium ions may include a carbon-based negative electrode active material, for example, crystalline carbon, amorphous carbon, and/or a (e.g., any suitable) combination thereof. For example, the crystalline carbon may include at least one of graphite such as non-shaped, sheet-shaped, flake-shaped, sphere-shaped, or fiber-shaped natural and/or artificial graphite, and the amorphous carbon may include soft carbon, hard carbon, mesophase pitch carbon, and/or calcined coke.

The lithium metal alloy may include an alloy of lithium and at least one metal that is selected from among Na, K, Rb, Cs, Fr, Be, Mg, Ca, Sr, Si, Sb, Pb, In, Zn, Ba, Ra, Ge, Al, and Sn.

The material that can dope and/or de-dope lithium may include a Si-based negative electrode active material and/or a Sn-based negative electrode active material. The Si-based negative electrode active material may include silicon, silicon-carbon composite, SiOₓ (where 0<x ≤ 2), Si-Q alloy (where Q is alkali metal, alkaline earth metal, Group 13 element, Group 14 element (except for Si), Group 15 element, Group 16 element, transition metal, a rare-earth element, and/or a (e.g., any suitable) combination thereof), and/or a (e.g., any suitable) combination thereof. The Sn-based negative electrode active material may include Sn, SnO₂, SnOₓ (where 0<x ≤ 2), a Sn-based alloy, a (e.g., any suitable) combination thereof.

The silicon-carbon composite may be a composite of silicon and amorphous carbon. According to one or more embodiments, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be present dispersed in an amorphous carbon matrix.

The silicon-carbon composite may further include crystalline carbon. For example, the silicon-carbon composite may include a core including crystalline carbon and silicon particles and may also include an amorphous carbon coating layer positioned on a surface of the core.

The Si-based negative electrode active material or the Sn-based negative electrode active material may be used in combination with a carbon-based negative electrode active material.

### Separator 30

Based on type (kind) of the rechargeable lithium battery, the separator 30 may be present between positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator, and/or the like.

The separator 30 may include a porous substrate and a coating layer positioned on one or opposite surfaces of the porous substrate, which coating layer includes an organic material, an inorganic material, and/or a (e.g., any suitable) combination thereof.

The porous substrate may be a polymer layer including one selected from among polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, and polytetrafluoroethylene (e.g., TEFLON), or may be a copolymer or mixture including two or more of the materials precedingly disclosed.

The organic material may include a polyvinylidenefluoride-based copolymer or a (meth)acrylic copolymer.

The inorganic material may include an inorganic particle selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, and/or a (e.g., any suitable) combination thereof, but the present disclosure is not limited thereto.

The organic material and the inorganic material may be present mixed in one coating layer or may be present as a stack of a coating layer including the organic material and a coating layer including an inorganic material.

### Electrolyte ELL

The electrolyte ELL for the rechargeable lithium battery may include a non-aqueous organic solvent and a lithium salt.

The non-aqueous organic solvent may serve as a medium for transmitting ions that participate in an electrochemical reaction of the battery.

The non-aqueous organic solvent may include a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2.5-dimethyltetrahydrofuran, and/or tetrahydrofuran. The ketone-based solvent may include cyclohexanone. The alcohol-based solvent may include ethyl alcohol and/or isopropyl alcohol. The aprotic solvent may include nitriles such as R-CN (where R is a hydrocarbon group having a C2 to C20 linear, branched, or cyclic structure and may include a double bond, an aromatic ring, and/or an ether group); amides such as dimethylformamide; dioxolanes such as 1,3-dioxolane or 1,4-dioxolane; and/or sulfolanes.

The non-aqueous organic solvent may be used alone or in a mixture of two or more substances.

In some embodiments, if (e.g., when) a carbonate-based solvent is used, a cyclic carbonate and a chain carbonate may be mixed and used, and the cyclic carbonate and the chain carbonate may be mixed in a volume ratio of about 1:1 to about 1:9.

The lithium salt may be a material that is dissolved in the non-aqueous organic solvent to serve as a supply source of lithium ions in a battery and plays a role in enabling a basic operation of a rechargeable lithium battery and in promoting the movement of lithium ions between positive and negative electrodes. The lithium salt may include, for example, at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB)

### Rechargeable Lithium Battery

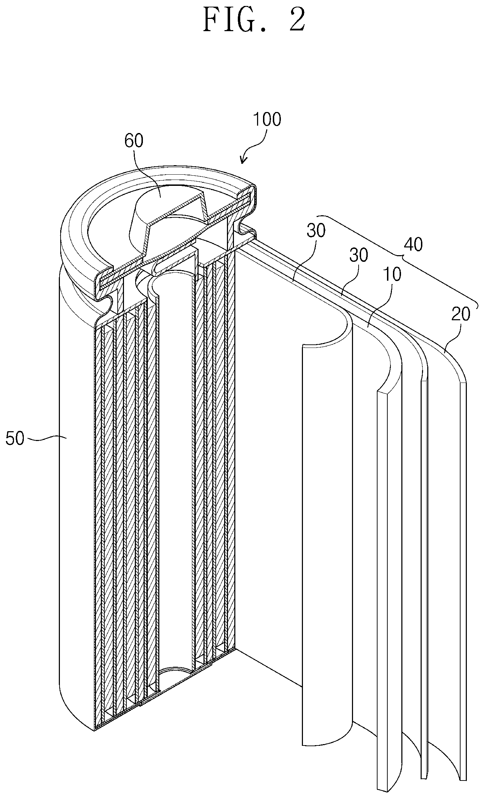

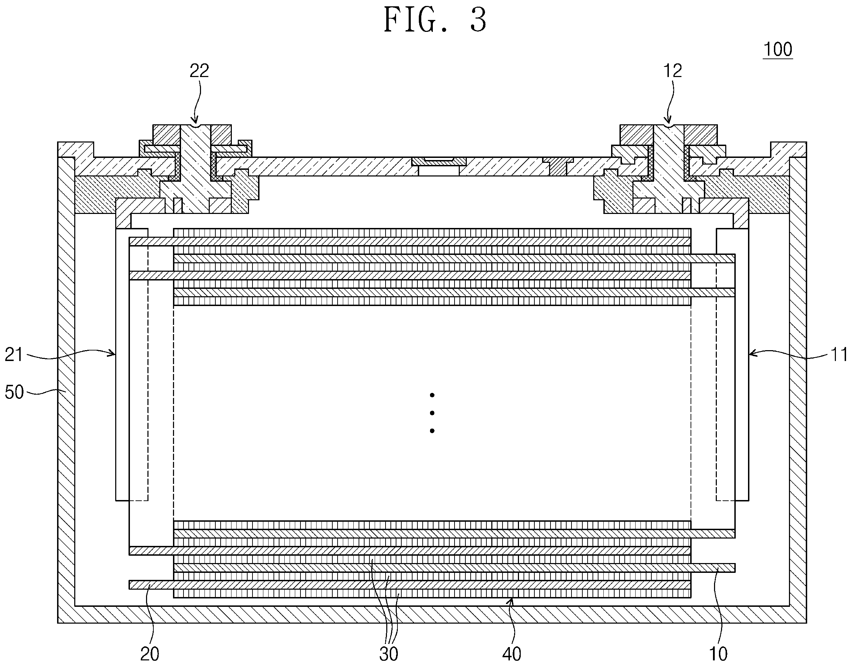

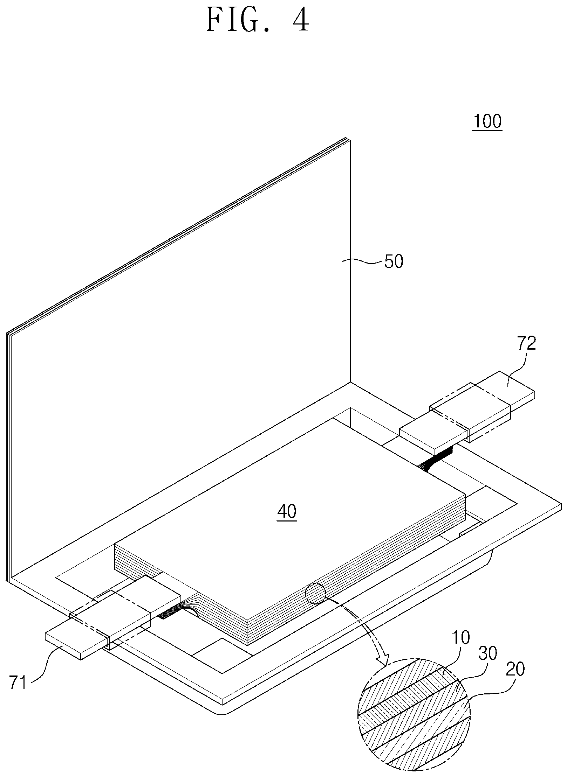

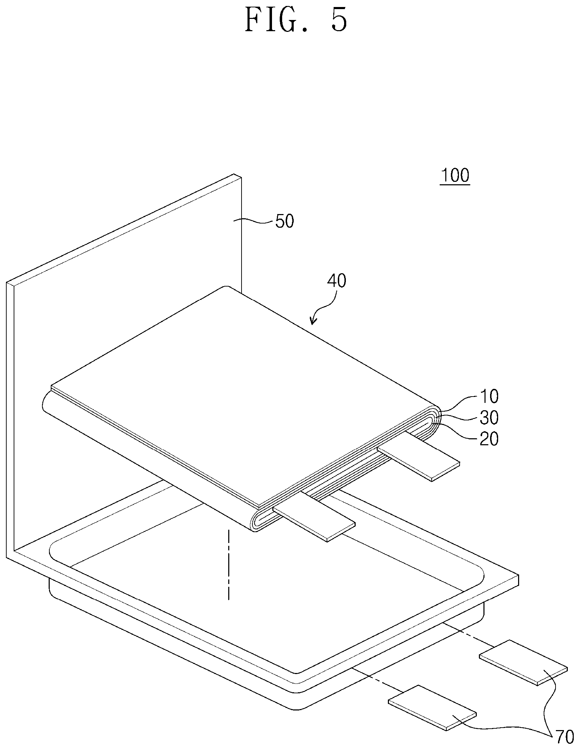

Based on shape of a rechargeable lithium battery, the rechargeable lithium battery may be classified into cylindrical, prismatic, pouch, and coin types (kinds). FIGS. 2 to 5 illustrate simplified diagrams showing a rechargeable lithium battery according to one or more embodiments, FIG. 2 showing a cylindrical battery, FIG. 3 showing a prismatic battery, and FIGS. 4 and 5 showing pouch-type (kind) batteries. Referring to FIGS. 2 to 5, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte. The rechargeable lithium battery 100 may include a sealing member 60 that seals the casing 50 as illustrated in FIG. 2. In some embodiments, as illustrated in FIG. 3, the rechargeable lithium battery 100 may include a positive electrode lead tab 11, a positive electrode terminal 12, a negative electrode lead tab 21, and a negative electrode terminal 22. As shown in each of FIGS. 4 and 5, the rechargeable lithium battery 100 may include an electrode tab 70, or a positive electrode tab 71 and a negative electrode tab 72, which electrode tabs 70, 71 and 72 may serve as an electrical path for externally inducing a current generated in the electrode assembly 40.

The rechargeable lithium battery according to one or more embodiments of the present disclosure may be applied to automotive vehicles, mobile phones, and/or any other electrical devices, but the present disclosure is not limited thereto.

### Positive Electrode Active Material Layer AML1

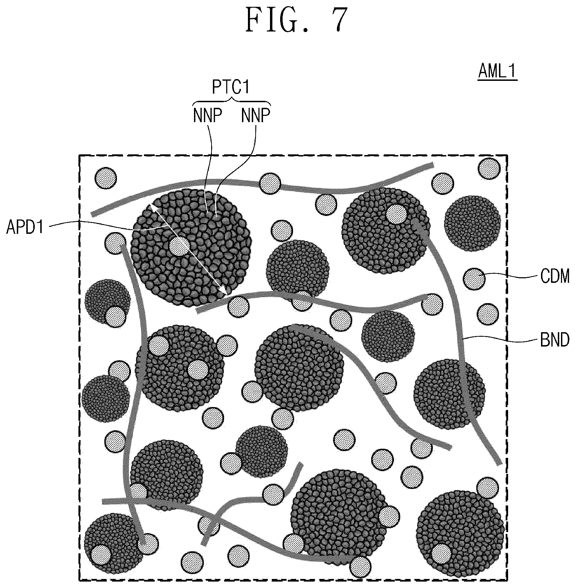

FIGS. 6 and 7 illustrate enlarged views showing a positive electrode active material layer AML1 of a rechargeable lithium battery according to one or more embodiments of the present disclosure. Referring to FIGS. 6 and 7, as discussed herein, the positive electrode active material layer AML1 (see also AML1 of FIG. 1) may include a first particle PTC1, a conductive material CDM, and a binder BND. A plurality of first particles PTC1 may constitute a positive electrode active material according to one or more embodiments of the present disclosure.

The positive electrode active material layer AML1 may further include an additive capable of serving as a sacrificial positive electrode.

An amount of the first particle PTC1 in the positive electrode active material layer AML1 may range from about 90 wt% to about 99.5 wt% relative to (e.g., based on) 100 wt% of the positive electrode active material layer AML1. Amounts of the binder BND and the conductive material CDM may be about 0.5 wt% to about 5 wt% relative to (e.g., based on) 100 wt% of the positive electrode active material layer AML1.

The binder BND may bond the first particle PTC1 and the conductive material CDM to each other. For example, the binder BND may include at least one selected from among polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon, but the present disclosure is not limited thereto.

The conductive material CDM may be used to improve the conductivity of the positive electrode active material layer AML1. Any conductive material that does not cause a chemical change of the positive electrode active material layer AML1 may be used without limitation as the conductive material CDM. For example, the conductive material CDM may include a carbon-based material such as natural graphite, artificial graphite, carbon black, acetylene black, Ketjen black, carbon fiber, carbon nano-fiber, and/or carbon nano-tube; a metal powder or metal fiber containing one or more selected from among copper, nickel, aluminium, and silver; a conductive polymer such as a polyphenylene derivative; and/or a (e.g., any suitable) mixture thereof.

The first particle PTC1 is discussed in more detail elsewhere herein.

### First Particle PTC1

The first particle PTC1 may include an olivine-based lithium compound expressed (e.g., represented) by Chemical Formula 1.

**Chemical Formula 1** Liₐ₁Feₓ₁B1_{y1}PO₄

In Chemical Formula 1, 0.8≤a1≤1.2, 0.950≤x1≤0.999, 0≤y1≤0.05, and B1 includes or is at least one element selected from among Ti, Al, Mg, Zr, V, Zn, Nb, K, Y, B, and Cu.

B1 may be a dopant doped in the first particle PTC1. The first particle PTC1 according to one or more embodiments may be or not be doped with a doping material.

A ratio (I_{D}/I_{G}) of Raman spectrum obtained by Raman spectroscopy for the first particle PTC1 ranges from about 0.5 to about 1.5. In one or more embodiments, the ratio (I_{D}/I_{G}) of Raman spectrum may range from about 0.9 to about 1.3.

The Raman spectrum may be measured using a Raman spectroscope. I_{G} may refer to an intensity of a G band peak present at a wave number (e.g., wave numbers) of about 1590±10 inverse centimeter (cm⁻¹) in the Raman spectrum, and I_{D} may refer to an intensity of a D band peak present at a wave number (e.g., wave numbers) of about 1340±10 cm⁻¹ in the Raman spectrum. The intensity may refer to the height of each band peak.

The G band peak according to one or more embodiments may indicate a peak originated from crystalline carbon, and the D band peak according to one or more embodiments may denote a peak originated from amorphous carbon. The Raman spectrum ratio (I_{D}/I_{G}) according to the present disclosure may determine the degree of crystallization of carbon.

There may be an optimum or suitable range for the Raman spectrum ratio (I_{D}/I_{G}), and if (e.g., when) the ratio (I_{D}/I_{G}) falls within a disclosed range, there may be exhibited excellent or suitable electrode plate slurry characteristics, high conductivity, and improved electrochemical properties.

If (e.g., when) the Raman spectrum ratio (I_{D}/I_{G}) is relatively small, a ratio of crystalline carbon may increase to cause an improvement in conductivity, and if (e.g., when) the Raman spectrum ratio (I_{D}/I_{G}) is relatively large, an amount of amorphous carbon may increase to cause deterioration in electrode plate slurry characteristics and an increase in surface resistance.

According to one or more embodiments, if (e.g., when) the Raman spectrum ratio (I_{D}/I_{G}) is less than about 0.5, electrode plate slurry characteristics may deteriorate (reduction in solid content (e.g., amount) and increase in viscosity), and an increase in resistance (overvoltage caused by reduction in ion conductivity) may increase a dissolution amount of metal during lifetime, which may result in a deterioration in cell performance and a reduction in the durability of the electrodes. In contrast, if (e.g., when) the Raman spectrum ratio (I_{D}/I_{G}) is greater than about 1.5, a coating layer of crystalline carbon on a particle surface may significantly increase to (e.g., rather) cause an increase in resistance (hindrance of intercalation and deintercalation of lithium ions), which may result in a decrease in reversible capacity (specific capacity) of positive electrodes and a reduction in the durability of the electrodes.

In one or more embodiments, the first particle PTC1 may include a coating layer on a surface thereof. The coating layer may cover (e.g., surround) an entirety or a portion of the surface of the first particle PTC1. For example, the coating layer may include carbon and/or a carbon-containing compound. The coating layer may cause the first particle PTC1 to have improved structural stability and increased electric conductivity.

The first particle PTC1 may further include carbon present in, or originated from, the coating layer and/or a grain boundary coating layer. An amount of carbon (e.g., as elemental carbon) in the first particle PTC1 may range from about 1.0 wt% to about 1.9 wt%, for example, about 1.0 wt% to about 1.8 wt%.

If (e.g., when) an amount of carbon element in the first particle PTC1 is less than about 1.0 wt%, carbon may not be evenly distributed throughout the interior of an active material particle. If (e.g., when) carbon (as carbon elemental equivalent) is added in an excessive amount of greater than about 1.9 wt%, a thick carbon coating layer may be generated on a surface of an active material particle.

As the positive electrode active material of the present disclosure includes the first particle PTC1, it may be possible to increase a pellet density, a capacity, and an energy density. In one or more embodiments, the positive electrode active material may have a pellet density (or compressed density) of about 2.2 gram per cubic centimeter (g/cc) to about 2.6 g/cc, or about 2.3 g/cc to about 2.5 g/cc.

The first particle PTC1 has a first average particle diameter APD1. The first average particle diameter APD1 may be set or changed depending on one or more embodiments of FIG. 6 or 7.

In one or more embodiments, referring back to FIG. 6, the first particle PTC1 may have a form of single particle. In this description, the term "single particle" may denote an individual particle without a grain boundary therein. The single particle may indicate one particle, a monolith structure, a single unitary structure, or a non-aggregated (e.g., non-agglomerated) particle, in which particles are not aggregated (e.g., agglomerated) together with one another but present as an independent phase in terms of morphology. For example, a single particle may be a single crystal. Alternatively, in one or more embodiments, the first particle PTC1 may be a particle containing several crystals. The single particle may be independently divided. Alternatively, in one or more embodiments, the first particle PTC1 may have a form in which 2 to 100 independent particles are attached to each other.

If (e.g., when) the first particle PTC1 is a single particle, the first average particle diameter APD1 of the first particle PTC1 may range from about 0.2 micrometer (µm) to about 20 µm. A minimum particle diameter of the first particle PTC1, or a size of a primary particle, may range from about 50 nanometer (nm) to about 500 nm.

In one or more embodiments, the average particle diameter may be measured with a particle size analyzer. The average particle diameter may refer to a diameter (D₅₀) of particles having a cumulative volume of 50 vol% in particle size distribution. In one or more embodiments, the minimum particle diameter, or a size of the primary particle, may refer to a diameter measured by randomly selecting approximately 30 primary particles from an electron microscope image of the first particle PTC1.

If (e.g., when) the first particle PTC1 is a single particle (e.g., being in a single particle form), as the first average particle diameter APD1 is extremely small, a large amount of the binder BND may be desired or required to attach the first particle PTC1 to a current collector (see COL1 of FIG. 1). For example, an amount of the binder BND may range from about 3 wt% to about 5 wt% relative to (e.g., based on) 100 wt% of the positive electrode active material layer AML1.

In one or more embodiments, referring back to FIG. 7, the first particle PTC1 may have a polycrystalline form, and may include a secondary particle (e.g., being in a secondary particle form) in which at least two primary particles NNP are aggregated (e.g., agglomerated). For example, a single first particle PTC1 may include a plurality of primary particles NNP that are aggregated (e.g., agglomerated) with each other. For example, the first particle may include an aggregation of the plurality of primary particles. The first particle PTC1 may have a spherical shape, an oval shape, and/or the like.

In one or more embodiments, the first particle PTC1 may further include a grain boundary coating layer on a surface of each of the primary particles NNP. The grain boundary coating layer may be present within (e.g., in the interior of) the first particle PTC1. The grain boundary coating layer may be coated along an interface between the primary particles NNP within the first particle PTC1. For example, the grain boundary coating layer may indicate a material coated on a grain boundary within (e.g., in the interior of) the first particle PTC1. The grain boundary coating layer may include carbon and/or a carbon-containing compound.

The interior of the first particle PTC1 may indicate an entire inner portion except for a surface of the first particle PTC1. For example, the interior of the first particle PTC1 may refer to an entire inside from an outer surface of the first particle PTC1 to a depth of about 10 nanometer (nm), or a portion from a depth of about 10 nm (from the outer surface) to a depth of about 2 micrometer (µm) (from the outer surface).

If (e.g., when) the first particle PTC1 further includes a grain boundary coating part, structural stability may be reinforced and a substantially uniform coating layer may be formed on the surface of the first particle PTC1. In some embodiments, if (e.g., when) the first particle PTC1 further includes a grain boundary coating part, the first particle PTC1 may have an excellent or suitable electric conductivity.

The first particle PTC1 may have a spherical shape in which nano-sized primary particles NNP are aggregated (e.g., agglomerated). If (e.g., when) the first particle PTC1 includes (e.g., is constituted by) the primary particles NNP that are densely aggregated (e.g., agglomerated) with each other, the first particle PTC1 may exhibit the following properties. The first particle PTC1 may have a spherical or oval shape.

If (e.g., when) the first particle PTC1 has a secondary particle form, (e.g., the first particle PTC1 is a spherical or oval secondary particle composed of an agglomeration of a plurality of primary particles) the first average particle diameter APD1 of the first particle PTC1 may range from about 0.2 µm to about 20 µm.

In one or more embodiments, an average particle diameter may be measured with a particle size analyzer. An average particle diameter may refer to a diameter (D₅₀) of particles having a cumulative volume of 50 vol% in particle size distribution.

The first particle PTC1 may include a plurality of primary particles NNP that are aggregated (e.g., agglomerated) with each other. The primary particles NNP may each have a particle size (an average particle size) of about 10 nm to about 400 nm.

In one or more embodiments, the minimum particle diameter, or a size of the primary particle, may refer to a diameter measured by randomly selecting approximately 30 primary particles from an electron microscope image of the first particle PTC1.

The first particle PTC1 may have a porosity of about 20% to about 60%. Porosity may be measured using Archimedes' principle, where it is calculated by comparing the sample's mass and volume. Alternatively, porosity can be measured using the BET surface area method, which involves nitrogen gas adsorption. A span value of the first particle PTC1 analyzed with a particle size analyzer may range from about 0.5 to about 7.

For example, the "span" value may refer to a value obtained by using a calculation formula (D₉₀-D₁₀)/D₅₀ where D₁₀, D₅₀, and D₉₀ are indicators representing particle sizes. The terms "D₁₀", "D₅₀", and "D₉₀", as used herein, are each an average particle diameter exhibited by a cumulative volume of about 10, 50, or 90 volume%, respectively, of the particles in a particle size distribution.

Also, in the present disclosure, the first particle, PTC1, may be defined as either a single particle form or a secondary particle form. The single particle form refers to an individual particle without a grain boundary or interface. This can include a single crystal, a polycrystalline material containing several crystals, a monolithic structure, a single unitary structure, or a non-aggregated particle. The first average particle diameter APD1 of a single particle may range from about 0.2 micrometers (µm) to about 20 µm, with a minimum particle diameter ranging from about 50 nanometers (nm) to about 500 nm. Due to its small size, a larger amount of binder may be required to attach it to a current collector. Conversely, the secondary particle form includes an aggregated structure where at least two primary particles are combined, forming a spherical or oval shape. This form may have a grain boundary or interface coating layer that enhances structural stability and electric conductivity. The first average particle diameter APD1 of a secondary particle may also range from about 0.2 µm to about 20 µm, with primary particles having a size of about 10 nm to about 400 nm. The secondary particle may have a porosity of about 20% to about 60%, with a span value ranging from about 0.5 to about 7, calculated using the formula (D₉₀-D₁₀)/D₅₀. In summary, the first particle, PTC1, can either be a single particle form, characterized by its non-aggregated structure and small size, or a secondary particle form, characterized by the aggregation of primary particles and the presence of a grain boundary or interface coating layer.

### Manufacture of Positive Electrode Active Material

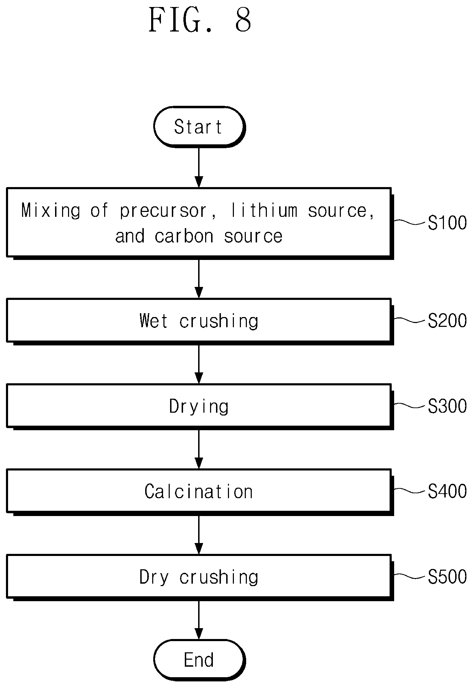

FIG. 8 illustrates a flow chart showing a method of manufacturing a positive electrode active material according to one or more embodiments of the present disclosure. With reference to FIG. 8, the following will describe in more detail a method of manufacturing the first particle PTC1 according to one or more embodiments of the present disclosure.

An iron phosphate precursor, a lithium source, and a carbon source may be added to and mixed in a solvent, thereby forming a first mixture (S100). For example, the solvent may be water and/or ethanol. The iron phosphate precursor may be a compound containing iron (Fe) and phosphorus (P) simultaneously, and/or a (e.g., any suitable) mixture of a compound containing iron (Fe) and a compound containing phosphorus (P). For example, the iron phosphate precursor may include FePO₄·H₂O and/or a (e.g., any suitable) mixture of FeSO₄ and H₃PO₄. For example, the iron phosphate precursor may include FePO₄ and/or a (e.g., any suitable) mixture of FeSO₄ and H₃PO₄.

The lithium source may include at least one selected from among lithium oxide, lithium hydroxide, lithium chloride, lithium nitrate, lithium nitrite, lithium formate, lithium acetate, lithium oxalate, lithium carbonate, lithium phosphate, lithium hydrogen phosphate, lithium dihydrogen phosphate, and lithium citrate.

The carbon source may include at least one selected from among glucose, sucrose, fructose, cellulose, starch, citric acid, polyacrylic acid, polyethylene glycol, and dopamine.

The carbon source may be mixed in an amount of about 5 wt% to about 20 wt% relative to (e.g., based on) the total weight of the mixture. If (e.g., when) the carbon source is added in a small amount of less than about 5 wt%, no carbon may be evenly distributed throughout the interior of an active material particle. If (e.g., when) the carbon source is added in an excessive amount of greater than about 20 wt%, a thick carbon coating layer may be generated on a surface of an active material particle.

The mixture may further include a dopant source. The dopant source may include an oxide containing dopant metal and/or a chloride containing dopant metal. For example, the dopant source may include at least one selected from among Ti, Al, Mg, Zr, V, Zn, Nb, K, Y, B, and Cu.

A wet crushing may be performed on the mixture (S200). The wet crushing may use an ordinary wet mill capable of controlling temperatures. For example, the wet crushing may use at least one selected from among a beads mill, a ball mill, an attrition mill, an apex mill, a super mill, and a basket mill. During the wet crushing process, particles in the mixture may be crushed to fine sizes.

In one or more embodiments of the present disclosure, the wet crushing (S200) may not be provided. For example, the wet crushing (S200) performed on precursor particles may not be provided to maximize or increase an average particle diameter of a first particle PTC1 which will be eventually manufactured.

A solvent may be removed from the mixture to form a dried mixture (S300).

If (e.g., when) the first particle PTC1 of FIG. 6 is manufactured in one or more embodiments of the present disclosure, the formation of the dried mixture may include performing a direct evaporation on the mixture. For example, the direct evaporation may include a static drying or a spray drying.

If (e.g., when) the first particle PTC1 of FIG. 7 is manufactured in one or more embodiments of the present disclosure, the formation of the dried mixture may include performing a spray drying on the mixture. The spray drying may use a commonly used spray dryer. For example, the spray drying may use at least one selected from among an ultrasonic spray dryer, an air nozzle spray dryer, an ultrasonic nozzle spray dryer, a filter expansion aerosol generator, and an electrostatic spray dryer.

The particles, which have been reduced to primary particle sizes through the wet crushing process, may be aggregated (e.g., agglomerated) during the spray drying process to form a secondary particle. Thus, a flow rate and velocity of carrier gas, temperature, and residence time and internal pressure in a reactor may be adjusted during the spray drying process to form a first particle PTC1 in the form of a secondary particle having a target size.

In one or more embodiments, the mixture used (e.g., targeted) for the spray drying may have a total solid content (e.g., amount) in a range of about 20 wt% to about 40 wt%. The solid content (e.g., amount) may refer to the weight percentage of a solid material (or a dried mixture) remaining after the evaporation of a solvent relative to (e.g., based on) the total weight of a mixture (or a spray solution). For example, the spray solution may have about 30 wt% of solid content (e.g., amount).

If (e.g., when) the solid content (e.g., amount) is less than about 20%, an average particle diameter of the first particle PTC1 may be reduced, and productivity may be decreased. If (e.g., when) the solid content (e.g., amount) is greater than about 40%, the first particle PTC1 may have a difficulty in adjusting its average particle diameter and have a large size deviation.

The spray solution according to the present embodiment may have a viscosity of about 1,500 millipascal second (mPa·s) to about 3,500 mPa·s or about 1,500 mPa·s to about 2,500 mPa·s at the aforementioned solid content (e.g., amount). For example, the spray solution may have a viscosity of about 2,000 mPa·s. The viscosity parameter refers to the viscosity measured using a rotational viscometer (RVT) at 25 °C. The viscosity is measured for 60 seconds at a rotational speed of 100 rpm.

In one or more embodiments, a feed rate for the spray drying may range from about 0.1 kilogram per minute (kg/min) to about 0.9 kg/min. A feed rate of the spray drying may refer to a weight of the solid content (e.g., amount) in the spray solution fed per hour. For example, if (e.g., when) the spray solution with about 20% of the solid content (e.g., amount) is fed at a rate of 1 kg per one minute, the feed rate may be about 0.2 kg/min. In one or more embodiments of disclosure, the feed rate for the spray drying may be about 0.5 kg/min.

In one or more embodiments, the spray drying may be performed at a temperature of about 100°C to about 300°C. For example, the spray drying may be performed at a temperature in a range of about 200°C to about 300°C, from greater than about 200°C to about equal to or less than about 300°C, or from about 230°C to about 270°C. A spray gas (e.g., air) used in the spray drying may be introduced at a first temperature and exhausted at a second temperature. For example, the first temperature may range from about 200°C to about 250°C. The second temperature may range from 80°C to about 150°C.

The feed pressure of the spray solution may range from about 0.2 megapascal (MPa) to about 0.7 MPa. For example, the feed pressure of the spray solution may be about 0.5 MPa.

If (e.g., when) the feed rate, the feed pressure, and the temperature of the spray drying satisfy the ranges disclosed, the first particle PTC1 may have a spherical shape and a desired (e.g., target) porosity.

The spray solution of the spray drying may have a flow rate of about 30 milliliter per minute (mL/min) to about 80 mL/min. If (e.g., when) the flow rate is less than about 30 mL/min, there may occur problems such as nozzle clogging and productivity reduction. If (e.g., when) the flow rate is greater than about 80 mL/min, moisture may be condensed in a spray dryer and thus there may occur problems such as incomplete drying of the mixture. The feed pressure of the spray solution may range from about 0.3 MPa to about 0.7 MPa. For example, the feed pressure of the spray solution may be about 0.5 MPa.

The dried mixture may be calcined under an inert environment (S400). The inert environment may be a nitrogen environment and/or an argon environment. The calcination process may be carried out in a total of two stages, and a first calcination process may be performed at a temperature of about 300°C to about 600°C. The first calcination process may be performed for about 1 hour to about 10 hours or about 2 hours to about 6 hours. Immediately thereafter, a second calcination process may be performed at a temperature of about 600°C to about 800°C (e.g. more than about 600°C to less than about 800°C), about 650°C to about 790°C, or about 690°C to about 790°C (e.g. about 700°C to about 780°C). The second calcination process may be performed for about 4 hours to about 24 hours or about 6 hours to about 20 hours. The calcination of the dried mixture may form the first particle PTC1 including the compound expressed (e.g., represented) by Chemical Formula 1. If (e.g., when) the calcination process temperature is less than about 600°C, a low reaction temperature may cause the formation of a phase other than a complete olivine-based phase, and in some embodiments, carbon coated on particle surfaces may not be crystallized but instead remain largely in the form of amorphous carbon. If (e.g., when) the calcination process temperature is greater than about 800°C, carbon coated on particle surfaces may become excessively (or substantially) crystallized to form a thick carbon coating layer, and this may hinder intercalation and deintercalation of lithium ions to thereby induce degradation in electrochemical performance. Further, a particle size may increase to cause an increase in resistance.

A dry crushing process may be performed on the calcined first particle PTC1 (S500). The calcined mixture may be crushed using an air jet mill.

If (e.g., when) the first particle PTC1 of FIG. 6 is manufactured in one or more embodiments of the present disclosure, the calcined mixture may be crushed at a rotation speed of equal to or greater than about 7,000 revolutions per minute (rpm). For example, the calcined mixture may be crushed at a rotation speed of about 7,000 rpm to about 10,000 rpm or about 7,500 rpm to about 9,000 rpm. Thus, the first particle PTC1 may have a single particle form as shown in FIG. 6.

If (e.g., when) the first particle PTC1 of FIG. 7 is manufactured in one or more embodiments of the present disclosure, the calcined mixture may be crushed at a rotation speed of about 0 rpm to about 7,000 rpm. For example, the calcined mixture may be crushed at a rotation speed of about 4,000 rpm to about 7,000 rpm, about 4,000 rpm to about 6,000 rpm, or about 4,500 rpm to about 5,000 rpm. Differently from the manufacture of the positive electrode active material of FIG. 6, the post-calcination crushing step (e.g., act or task) (S500) may be performed at a relatively mild condition. If (e.g., when) the positive electrode active material of FIG. 7 is manufactured, for example, the dry crushing (S500) may not be provided. If (e.g., when) the rotation speed of the crushing step (e.g., act or task) (S500) satisfies the range disclosed, the first particle PTC1 may maintain to have a secondary particle form. Thus, the first particle PTC1 may have a secondary particle form as shown in FIG. 7.

The manufactured primary particle includes a compound expressed (e.g., represented) by Chemical Formula 1.

A ratio (I_{D}/I_{G}) of the intensity (I_{D}) of the D band peak present at a wave number (e.g., wave numbers) of about 1340±10 cm⁻¹ to the intensity (I_{G}) of the G band peak present at a wave number (e.g., wave numbers) of about 1590±10 cm⁻¹ is in a range of about 0.5 to about 1.5 in a Raman spectrum obtained from Raman spectroscopy,

**Chemical Formula 1** Liₐ₁Feₓ₁B1_{y1}PO₄

In Chemical Formula 1, 0.8≤a1≤1.2, 0.950≤x1≤0.999, 0≤y1≤0.05, and B1 is at least one element selected from among Ti, Al, Mg, Zr, V, Zn, Nb, K, Y, B, and Cu.

In a method of manufacturing the first particle PTC1 according to one or more embodiments of the present disclosure, the carbon source may be introduced into the iron phosphate precursor to uniformly (e.g., substantially uniformly) form a carbon coating layer on a surface of a primary particle. Afterwards, primary particles may be closely aggregated (e.g., agglomerated) through a spray drying to form a dense secondary spherical particle. Accordingly, the first particle PTC1 may include a stable carbon coating layer outside and inside the first particle PTC1, and thus may have a relatively large amount of carbon. An appropriate or suitable carbon amount of the first particle PTC1 of FIG. 7 may improve conductivity of the positive electrode active material layer AML1.

A method of manufacturing a positive electrode active material according to one or more embodiments of the present disclosure may include filtration and iron removal after the dry crushing. The first particle PTC1 having a desired (e.g., target) size may be obtained through the filtration and the iron removal.

A carbon elemental analysis according to one or more embodiments of the present disclosure may be performed with an elemental analyzer, for example, Elementar Micro Cube commercially available from Elementar Analysensysteme GmbH. A detailed operating method and conditions may be as follows. 1 to 2 mg of a sample may be weighed in a tin cup, and the sample may be placed into an automatic sampling tray and fed into a combustion tube through a ball valve to be burned at a combustion temperature of 1,000°C. Thereafter, reduced copper may be used to reduce the combusted gas to form carbon dioxide. A TCD detector may be utilized to detect the carbon dioxide.

In a method of measuring an amount of carbon according to one or more embodiments of the present disclosure, scanning electron microscope-energy dispersive X-ray spectroscopy (SEM-EDS) may be performed on a particle surface, and a quantitative analysis may be executed to obtain the amount of carbon. Besides SEM-EDS, inductively coupled plasma mass spectrometry (ICP-MS) or inductively coupled plasma optical emission spectroscopy (ICP-OES) may be used to measure the amount of carbon.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or ± 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6.

The following will describe Example Embodiments and Comparative Examples of the present disclosure. The following Example Embodiments, however, are merely one or more possible examples, and the present disclosure is not limited to following Example Embodiments disclosed herein.

### EXAMPLES

### Example Embodiment 1: Manufacture of Positive Electrode Active Material in the Form of Single Particle

FePO₄·H₂O as an iron phosphate precursor and lithium carbonate were mixed in a molar ratio of Fe:Li of 1:1.03. 8 wt% of glucose was further added to the (e.g., total weight of the) mixture. A ball mill was used to perform a wet crushing process on the mixture. The mixture was evaporated and dried on a heating furnace tray, and then introduced into a vacuum oven at 85°C and dried for 4 hours. The dried mixture was first calcined at 450°C for 4 hours under a nitrogen environment, and then second calcined at 700°C for 12 hours. The calcined product was crushed at a rotation speed of 8,000 rpm to obtain a positive electrode active material in the form of single particles.

### Example Embodiment 2: Manufacture of Positive Electrode Active Material in the Form of Secondary Particle

FePO₄·H₂O as an iron phosphate precursor and lithium carbonate were mixed in a molar ratio of Fe:Li of 1:1.03. 12 wt% of glucose was further added to the (e.g., total weight of the) mixture. The mixture as slurry was spray dried at a temperature of 230°C under a spray pressure of 0.5 megapascal (MPa), thereby being evaporated and dried. The dried mixture was first calcined at 450°C for 4 hours under a nitrogen environment and then second calcined at 700°C for 12 hours to obtain a positive electrode active material in the form of secondary particles.

In other words, Example Embodiment 1 described the manufacture of a positive electrode active material in the form of single particles. FePO₄·H₂O and lithium carbonate were mixed in a 1:1.03 molar ratio, with 8 wt% glucose added. The mixture underwent wet crushing with a ball mill, was dried, first calcined at 450°C for 4 hours under nitrogen, and then second calcined at 700°C for 12 hours. The calcined product was then crushed at 8,000 rpm.

Example Embodiment 2 outlined the manufacture of a positive electrode active material in the form of secondary particles. FePO₄·H₂O and lithium carbonate were mixed in a 1:1.03 molar ratio, with 12 wt% glucose added. The slurry mixture was spray dried at 230°C under 0.5 MPa pressure. The dried mixture was then calcined under the same conditions as in Example Embodiment 1 to obtain secondary particles.

### Example Embodiment 3

A positive electrode active material was manufactured in substantially the same method as in Example Embodiment 2, except that the second calcination was performed at 780°C.

### Example Embodiment 4

A positive electrode active material was manufactured in substantially the same method as in Example Embodiment 2, except that 5 wt% of glucose was added to the mixture.

### Example Embodiment 5

A positive electrode active material was manufactured in substantially the same method as in Example Embodiment 2, except that 20 wt% of glucose was added to the mixture.

### Comparative Example 1

A positive electrode active material was manufactured in substantially the same method as in Example Embodiment 2, except that the second calcination was performed at 600°C.

### Comparative Example 2

A positive electrode active material was manufactured in substantially the same method as in Example Embodiment 2, except that the second calcination was performed at 800°C.

### Example Embodiment 6

A positive electrode active material was manufactured in substantially the same method as in Example Embodiment 2, except that 3 wt% of glucose was added to the mixture.

### Example Embodiment 7

A positive electrode active material was manufactured in substantially the same method as in Example Embodiment 2, except that 25 wt% of glucose was added to the mixture.

### Manufacture of Positive Electrode

95 wt% of a final positive electrode active material, 3 wt% of polyvinylidene fluoride as a binder, and 2 wt% of carbon black as a conductive material were mixed in an N-methylpyrrolidone solvent to prepare a positive electrode active material slurry. The positive electrode active material slurry was coated and dried on an aluminium current collector, and then pressed to manufacture a positive electrode.

### Fabrication of Rechargeable Lithium Battery

A 2032-type (kind) coin half-cell was fabricated using the manufactured positive electrode and a lithium metal counter electrode. A separator (having a thickness of about 16 micrometer (µm)) formed of a porous polyethylene (PE) film was arranged (e.g., interposed) between the positive electrode and the lithium metal counter electrode, and an electrolyte was introduced to fabricate a rechargeable lithium battery. 1.3M LiPF₆ was mixed with a solvent including ethylene carbonate (EC), ethyl methyl carbonate (EMC), and dimethyl carbonate (DMC) mixed in a volume ratio of 3:4:3, and the mixture was used as the electrolyte.

### Evaluation 1: Amount of Carbon in Active Material

Table 1 lists results of measured amount of carbon in the Example Embodiments and Comparative Examples.

**Table 1**

| | Temperature condition of second calcination | Amount of carbon (wt%) |
|---|---|---|
| Example Embodiment 1 | 700 °C | 1.20 |
| Example Embodiment 2 | 700 °C | 1.40 |
| Example Embodiment 3 | 780 °C | 1.15 |
| Example Embodiment 4 | 700 °C | 1.10 |
| Example Embodiment 5 | 700 °C | 1.76 |
| Comparative Example 1 | 600 °C | 1.34 |
| Comparative Example 2 | 800 °C | 1.13 |
| Example Embodiment 6 | 700 °C | 1.01 |
| Example Embodiment 7 | 700 °C | 1.90 |

Referring to Table 1, it may be ascertained that the positive electrode active materials according to Example Embodiments 1 to 7 of the present disclosure have a carbon amount of about 1.0 wt% to about 1.9 wt%, based on a total amount of that the positive electrode active material.

### Evaluation 2: Analysis on Surface of Positive Electrode Active Material

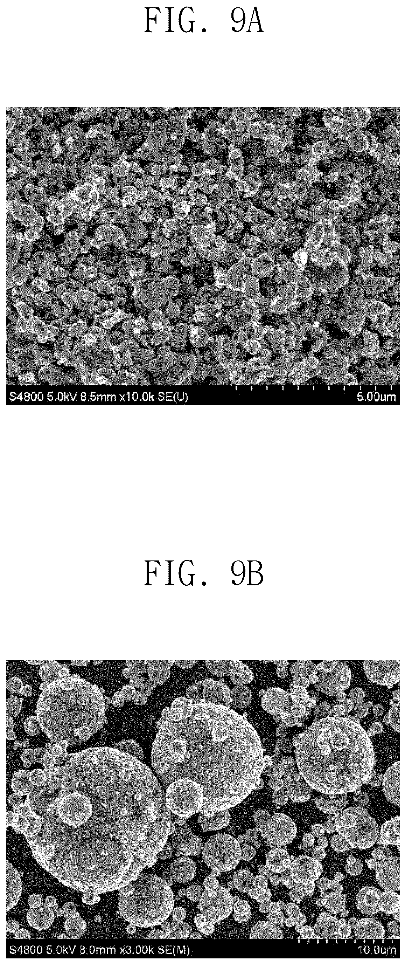

A scanning electron microscope (SEM) was used to observe a surface of the positive electrode active material. FIG. 9A shows an SEM image of the positive electrode active material manufactured in Example Embodiment 1. FIG. 9B shows an SEM image of the positive electrode active material manufactured in Embodiment 2. Referring to FIG. 9A, it may be observed that the positive electrode active material according to Example Embodiment 1 of the present disclosure has a single particle form (e.g., a plurality of single particles), and that a primary particle comprising the single particle form has a size of about 100 nanometer (nm) to about 600 nm, e.g., about 300 nm to about 400 nm.

Referring to FIG. 9B, it may be observed that the positive electrode active material according to Example Embodiment 2 of the present disclosure includes the first particle in the form of a spherical secondary particle in which a plurality of primary particles are aggregated (e.g., agglomerated). It may be ascertained that the positive electrode active material in the form of a secondary particle has an average particle diameter of about 6 µm to about 12 µm, e.g., about 9 µm, and that the primary particle of (e.g., constituting) the secondary particle has a size of about 50 nm to about 200 nm.

### Evaluation 3: Coating Uniformity of Positive Electrode Active Material

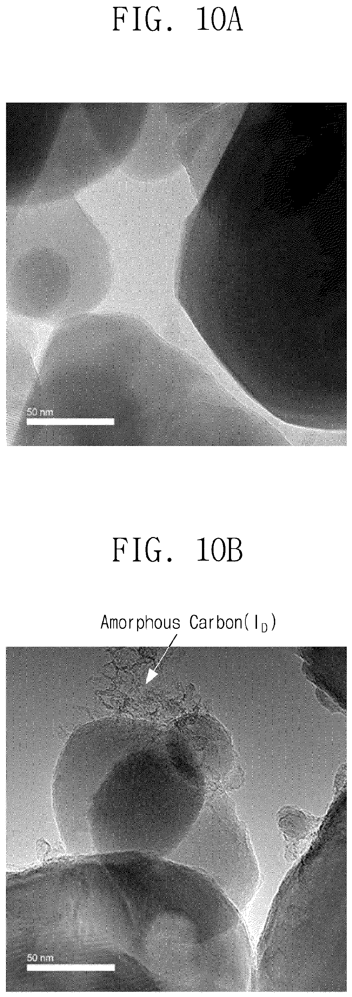

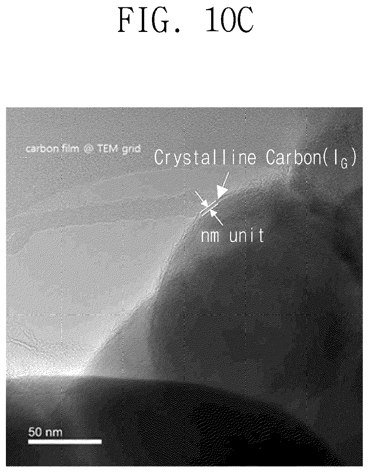

A transmission electron microscope (TEM) was used to observe the distribution of coating in the positive electrode active material. FIG. 10A shows a TEM image of the positive electrode active material manufactured in Example Embodiment 1. FIG. 10B shows a TEM image of the positive electrode active material manufactured in Comparative Example 1. FIG. 10C shows a TEM image of the positive electrode active material manufactured in Example Embodiment 2.

Referring to FIGS. 10A and 10C, it may be ascertained that a carbon coating is uniformly (e.g., substantially uniformly) distributed on a particle surface and interior of the positive electrode active materials according to the Example Embodiments of the present disclosure.

Referring to FIG. 10B, it may be ascertained that the positive electrode active material according to the Comparative Examples of the present disclosure has an excessively (or substantially) high amount of carbon as (e.g., to generate) a thick carbon coating layer on a particle surface. Such carbon coating layer may increase a specific surface area of the positive electrode active material particle, which may hinder the movement of lithium (e.g., due to an increase in resistance).

### Evaluation 4: Raman Spectroscopic Analysis

Raman spectroscopic analysis was performed on the positive electrode active materials manufactured in the Example Embodiments and Comparative Examples. The Raman spectroscopic analysis used LabRab HR evolution UV-VIS-NIR, commercially available from Horiba Ltd., to measure Raman spectra of the positive electrode active materials.

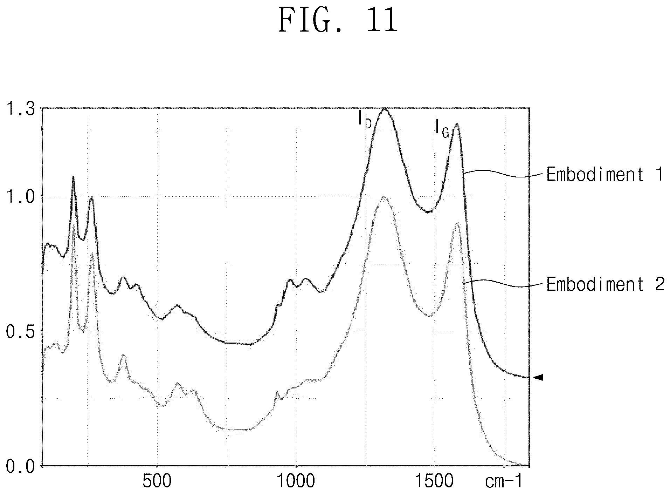

The results are shown in Table 2 and FIG. 11.

**Table 2**

| | Raman value (I_{D}/I_{G}) |
|---|---|
| Example Embodiment 1 | 1.2 |
| Example Embodiment 2 | 1.2 |
| Example Embodiment 3 | 0.6 |
| Example Embodiment 4 | 1.1 |
| Example Embodiment 5 | 1.3 |
| Comparative Example 1 | 1.5 |
| Comparative Example 2 | 0.5 |
| Example Embodiment 6 | 1.05 |
| Example Embodiment 7 | 1.35 |

Referring to FIG. 11, the Raman spectra obtained from the Raman spectroscopic analysis show values of G band (1594 cm⁻¹) and D band (1338 cm⁻¹).

Referring to Table 2, it may be ascertained that the positive electrode active materials according to the Example Embodiments of the present disclosure have a Raman spectrum ratio (I_{D}/I_{G}) in a range of about 0.6 to about 1.35 obtained from the Raman spectroscopic analysis.

### Evaluation 5: Battery Characteristics

There were evaluated characteristics of the rechargeable lithium batteries fabricated using the positive electrode active materials of the Example Embodiments and Comparative Examples.

The rechargeable lithium battery was initially charged under conditions of constant current (0.2 C) and constant voltage (3.80 V), and after resting for 10 minutes, the rechargeable lithium batteries were initially discharged under conditions of constant current (0.2 C) until a voltage reached 2.5 V. Afterwards, the rechargeable lithium battery was charged and discharged once at -20°C with a rate of 0.2 C/0.2 C. The evaluation results of battery characteristics are shown in Table 3.

**Table 3**

| | 3.80 V charge capacity (mAh/g) | 2.50 V discharge capacity (mAh/g) | 2.5-3.8 V efficiency (%) | -20°C capacity (mAh/g) |
|---|---|---|---|---|
| Example Embodiment 1 | 161.4 | 155.2 | 96.2 | 53.2 |
| Example Embodiment 2 | 160.2 | 156.3 | 97.6 | 91.2 |
| Example Embodiment 3 | 157.2 | 152.4 | 96.9 | 74.3 |
| Example Embodiment 4 | 161.6 | 155.7 | 96.3 | 86.7 |
| Example Embodiment 5 | 158.5 | 153.9 | 97.1 | 88.7 |
| Comparative Example 1 | 154.8 | 149.5 | 96.6 | 70.3 |
| Comparative Example 2 | 156.7 | 151.1 | 96.4 | 71.6 |
| Example Embodiment 6 | 156.9 | 151.2 | 96.4 | 83.5 |
| Example Embodiment 7 | 158.3 | 154.1 | 97.3 | 87.2 |

Referring to Table 3, it may be observed that the rechargeable lithium batteries according to the Example Embodiments of the present disclosure have a greater capacity than that of the rechargeable lithium batteries according to the Comparative Examples. It may also be observed that the rechargeable lithium batteries according to the Example Embodiments of the present disclosure exhibit charge and/or discharge efficiencies that are superior to that of the rechargeable lithium batteries according to the Comparative Examples. In some embodiments, it may be observed that the rechargeable lithium batteries according to the Example Embodiments of the present disclosure have a low-rate capacity value that is more excellent or suitable than that of the rechargeable lithium batteries according to the Comparative Examples.

Accordingly, it may be ascertained that each of the positive electrode active materials according to the Example Embodiments has a positive electrode active material within (e.g., meets) the range of about 1.0 to 1.9 wt% carbon content (e.g., amount), and a Raman spectrum ratio (I_{D}/I_{G}) of about 0.6 to 1.35 obtained from Raman spectroscopic analysis. The positive electrode active materials according to the Example Embodiments include evenly distributed carbon having an optimum or suitable amount and thickness to significantly improve conductivity and electrochemical properties of the rechargeable lithium battery.

A positive electrode active material according to the present disclosure includes a first particle.

In the positive electrode active material according to the present disclosure, the first particle may be uniformly (e.g., substantially uniformly) coated with an optimum or suitable amount of coating material. A rechargeable lithium battery according to the present disclosure may have high conductivity and improved electrochemical properties.

A battery manufacturing device, a management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the components of the device may be formed on one integrated circuit (IC) chip or on separate IC chips. Further, the components of the device may be implemented on a flexible printed circuit film, a tape carrier package (TCP), a printed circuit board (PCB), or formed on one substrate. Further, the components of the device may be a process or thread, running on one or more processors, in one or more computing devices, executing computer program instructions and interacting with other system components for performing the functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of computing devices may be combined or integrated into a single computing device, or the functionality of a particular computing device may be distributed across one or more other computing devices without departing from the scope of the present disclosure.

A person of ordinary skill in the art, in view of the present disclosure in its entirety, would appreciate that each suitable feature of the embodiments of the present disclosure may be combined or combined with each other, partially or entirely, and may be technically interlocked and operated in one or more suitable ways, and each embodiment may be implemented independently of each other or in conjunction with each other in any suitable manner unless otherwise stated or implied.

While this disclosure has been described in connection with what are presently considered to be Example Embodiments, it is to be understood that the present disclosure is not limited to the disclosed Example Embodiments and is intended to cover one or more suitable modifications and equivalent arrangements included within the scope of the appended claims, and equivalents thereof. Therefore, the aforementioned Example Embodiments should be understood to be exemplarily but not limiting this disclosure in any way.

## Claims

1. A positive electrode active material, comprising a first particle that comprises a compound represented by Chemical Formula 1, and has a first average particle diameter,
wherein a Raman spectrum of the first particle comprises:
a D band peak at wave numbers of about 1340 ± 10 inverse centimeter (cm⁻¹);
a G band peak at wave numbers of about 1590 ± 10 cm⁻¹; and
a ratio (I_{D}/I_{G}) of an intensity (I_{D}) of the D band peak to an intensity (I_{G}) of the G band peak is about 0.5 to about 1.5,
**Chemical Formula 1** Liₐ₁Feₓ₁B1_{y1}PO₄,
wherein, in Chemical Formula 1,
0.8≤a1≤1.2,
0.950≤x1≤0.999,
0≤y1≤0.05, and
B1 is at least one element selected from among Ti, Al, Mg, Zr, V, Zn, Nb, K, Y, B, and Cu.

2. The positive electrode active material of claim 1, wherein the first particle comprises a carbon-containing coating layer.

3. The positive electrode active material of claim 1, wherein
the first particle comprises a carbon-containing coating layer, and
an amount of carbon in the first particle is about 1.0 wt% to about 1.9 wt%.

4. The positive electrode active material of any one of claims 1 to 3, wherein
the first particle is a single particle, and
the first average particle diameter is about 0.2 micrometer (µm) to about 20 µm.

5. The positive electrode active material of claim 4, wherein
the first particle comprises at least one primary particle, and
a size of the primary particle is about 50 nanometer (nm) to about 500 nm.

6. The positive electrode active material of any one of claims 1 to 3, wherein
the first particle comprises an aggregation of a plurality of primary particles, and
an average particle size of the primary particles is about 10 nm to about 400 nm.

7. The positive electrode active material of claim 6, wherein
the first particle is a spherical secondary particle, and
the first average particle diameter is about 0.2 micrometer (µm) to about 20 µm.

8. The positive electrode active material of claim 6 or claim 7, wherein
the first particle further comprises a grain boundary coating layer on an interface between the primary particles, and
wherein the grain boundary coating layer comprises carbon.

9. The positive electrode active material of any one of claims 6 to 8, wherein a porosity of the first particle is about 20% to about 60%.

10. The positive electrode active material of any one of claims 6 to 9, wherein a span value of the first particle analyzed with a particle size analyzer is about 0.5 to about 7.

11. A method comprising:
forming a mixture by mixing an iron phosphate precursor, a lithium source, and a carbon source;
drying the mixture; and
preparing a first particle by performing a calcination to a dried mixture,
wherein the first particle comprises a compound represented by Chemical Formula 1,
wherein a Raman spectrum of the first particle comprises:
a D band peak at wave numbers of about 1340 ± 10 cm⁻¹;
a G band peak at wave numbers of about 1590 ± 10 cm⁻¹; and
a ratio (I_{D}/I_{G}) of an intensity (I_{D}) of the D band peak to an intensity (I_{G}) of the G band peak is about 0.5 to about 1.5,
**Chemical Formula 1** Liₐ₁Feₓ₁B1_{y1}PO₄,
wherein, in Chemical Formula 1,
0.8≤a1≤1.2,
0.950≤x1≤0.999,
0≤y1≤0.05, and
B1 is at least one element selected from among Ti, Al, Mg, Zr, V, Zn, Nb, K, Y, B, and Cu, and
wherein the method is a method of manufacturing a positive electrode active material.

12. The method of claim 11, wherein the forming of the mixture comprises adding a dopant source and performing a mixture process.

13. The method of claim 11 or claim 12, wherein the carbon source is mixed in an amount of about 5 wt% to about 20 wt% based on a total weight of the mixture.

14. The method of any one of claims 11 to 13, wherein the drying of the mixture comprises spray drying.

15. The method of claim 14, wherein the mixture is a spray solution having a solid amount of about 20% to about 40% and a viscosity of about 1,500 millipascal second (mPa·s) to about 2,500 mPa·s.
